# EUROPEAN PATENT APPLICATION

(11) **EP 3 216 772 A1**
(43) Date of publication of application: **13.09.2017**
(21) Application number: 17159330.4
(22) Date of filing: 06.03.2017
(51) Int. Cl.: C04B 37/00, F01D 11/00

(54) **CERAMIC MATRIX COMPOSITE COMPONENT,GAS TURBINE SEAL ASSEMBLY, AND METHOD OF FORMING CERAMIC MATRIX COMPOSITE COMPONENT**

(30) Priority: 09.03.2016 US 201615064801
(71) Applicant: General Electric Company, Schenectady, NY 12345 (US)
(72) Inventor: HAFNER, Matthew Troy, Greenville, SC 29615 (US); ITZEL, Gary Michael, Greenville, SC 29615 (US); DELVAUX, John McConnell, Greenville, SC 29615 (US)
(74) Representative: Lee, Brenda

(57) **Abstract**

A gas turbine seal assembly includes a gas turbine component (20) and a gas turbine seal component (56) contacting the gas turbine component (20) to form a seal (52) between the two components. The gas turbine seal component (56) includes ceramic matrix composite plies (12) bonded together to form the ceramic matrix composite component (20). A bond-inhibiting coating (14) on a non-bonding portion (24) of a first surface of one of the ceramic matrix composite plies (12) prevents bonding between the non-bonding portion (24) of the first surface and a second surface of a neighboring ceramic matrix composite ply (12). At least one bonding portion (16) of the first surface lacking the bond-inhibiting coating (14) is bonded to the second surface. A method of forming a ceramic matrix composite component (20) includes selectively applying a bond-inhibiting coating (14) to a non-bonding portion (24) of a first surface of a ceramic matrix composite ply (12) and bonding the ceramic matrix composite plies (12) together.

## Description

### STATEMENT REGARDING FEDERALLY-SPONSORED RESEARCH

This invention was made with Government support under contract number DE-FE0024006 awarded by the Department of Energy. The Government has certain rights in the invention.

### FIELD OF THE INVENTION

The present invention is directed to a component and a method of producing a component. More specifically, the present invention is directed to a ceramic matrix composite component, a gas turbine seal assembly, and a method of forming a ceramic matrix composite component.

### BACKGROUND OF THE INVENTION

Certain ceramic matrix composite (CMC) materials include compositions having a ceramic matrix reinforced with coated fibers. The composition provides strong, lightweight, and heat-resistant materials with possible applications in a variety of different systems.

The manufacture of a CMC material typically includes laying up and fixing the fibers in the shape of the desired component, infiltrating the fibers with the matrix material, and any machining or further treatments of the material. Infiltrating the fibers may include depositing the ceramic matrix out of a gas mixture, pyrolyzing a pre-ceramic polymer, chemically reacting elements, sintering, generally in the temperature range of 925 to 1650 °C (1700 to 3000 °F), or electrophoretically depositing a ceramic powder.

Various kinds of seals in gas turbines control clearances and leakage between moving parts. Gas turbine seals may be exposed to highly corrosive operating conditions, including high temperatures and high pressures.

Multiple plies of CMC materials, when bound together and having sufficient strength to serve as a gas turbine seal, often lack the flexibility required to form a good seal with the gas turbine component in situations where there is any kind of misalignment between the CMC gas turbine seal and a seal slot of the gas turbine component, thereby leading to leakage.

### BRIEF DESCRIPTION OF THE INVENTION

In an embodiment, a method of forming a ceramic matrix composite component includes selectively applying a bond-inhibiting coating to at least one non-bonding portion of at least one first surface of at least one of a plurality of ceramic matrix composite plies. The method also includes bonding the plurality of ceramic matrix composite plies together to form the ceramic matrix composite component such that at least one bonding portion of the at least one first surface lacking the bond-inhibiting coating bonds to a second surface of a neighboring ceramic matrix composite ply of the plurality of ceramic matrix composite plies and the bond-inhibiting coating prevents bonding between the non-bonding portion of the at least one first surface and the second surface.

In another embodiment, a ceramic matrix composite component includes a plurality of ceramic matrix composite plies bonded together to form the ceramic matrix composite component. A bond-inhibiting coating on at least one non-bonding portion of at least one first surface of at least one of the plurality of ceramic matrix composite plies prevents bonding between the non-bonding portion of the at least one first surface and a second surface of a neighboring ceramic matrix composite ply of the plurality of ceramic matrix composite plies. At least one bonding portion of the at least one first surface lacking the bond-inhibiting coating is bonded to the second surface.

In another embodiment, a gas turbine seal assembly includes a gas turbine component and a gas turbine seal component contacting the gas turbine component to form a seal between the gas turbine component and the gas turbine seal component. The gas turbine seal component includes a plurality of ceramic matrix composite plies bonded together to form a ceramic matrix composite component. A bond-inhibiting coating on at least one non-bonding portion of at least one first surface of at least one of the plurality of ceramic matrix composite plies prevents bonding between the non-bonding portion of the at least one first surface and a second surface of a neighboring ceramic matrix composite ply of the plurality of ceramic matrix composite plies. At least one bonding portion of the at least one first surface lacking the bond-inhibiting coating is bonded to the second surface.

Other features and advantages of the present invention will be apparent from the following more detailed description, taken in conjunction with the accompanying drawings which illustrate, by way of example, the principles of the invention.

### BRIEF DESCRIPTION OF THE DRAWINGS

FIG. 1 is a schematic top view of a ceramic matrix composite ply with a bond-inhibiting coating in an embodiment of the present disclosure.
FIG. 2 is a schematic top view of a ceramic matrix composite ply with another bond-inhibiting coating in an embodiment of the present disclosure.
FIG. 3 is a schematic top view of a ceramic matrix composite ply with another bond-inhibiting coating in an embodiment of the present disclosure.
FIG. 4 is a schematic top view of a ceramic matrix composite ply with another bond-inhibiting coating in an embodiment of the present disclosure.
FIG. 5 is a schematic side cross sectional view of a ceramic matrix composite component of the bonded ceramic matrix composite plies of FIG. 1.
FIG. 6 is a schematic side cross sectional view of a ceramic matrix composite component with an alternative bonding pattern in an embodiment of the present disclosure.
FIG. 7 is a schematic side cross sectional view of a ceramic matrix composite component with another alternative bonding pattern in an embodiment of the present disclosure.
FIG. 8 is a schematic side cross sectional view of a gas turbine seal assembly incorporating the ceramic matrix composite component of FIG. 5.

Wherever possible, the same reference numbers will be used throughout the drawings to represent the same parts.

### DETAILED DESCRIPTION OF THE INVENTION

Provided is a method of forming a ceramic matrix composite (CMC) component, a formed CMC component, and a gas turbine seal assembly, where a bond-inhibiting coating prevents bonding between a non-bonding portion of a CMC ply surface and a neighboring CMC ply surface, while a bonding portion lacking the bond-inhibiting coating is bonded to the neighboring CMC ply surface.

Embodiments of the present disclosure, for example, in comparison to concepts failing to include one or more of the features disclosed herein, provide a high temperature seal with improved flexibility, provide a high temperature seal that better conforms to misaligned seal slots, provide a high temperature seal with better sealing, provide a high temperature seal with less leakage, provide improved gas turbine performance, or combinations thereof.

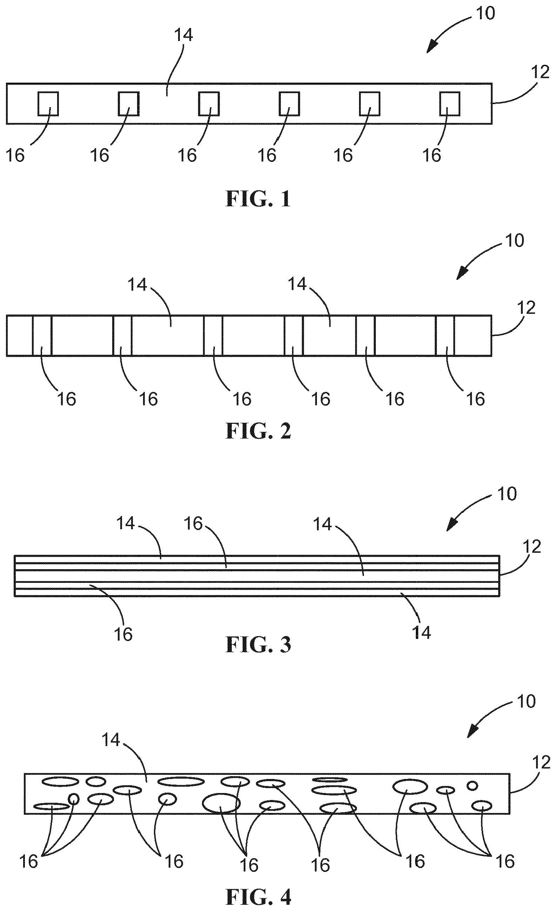

Referring to FIG. 1 through FIG. 4, a ceramic matrix composite component layer 10 includes a ceramic matrix composite ply 12 and a bond-inhibiting coating 14 on a portion of one surface of the ceramic matrix composite ply 12. The bond-inhibiting coating 14 is preferably as thin as possible while still inhibiting bonding between the coated surface of the CMC ply 12 and the neighboring CMC ply 12. In some embodiments, the thickness of the bond-inhibiting coating 14 is in the range of about 1% to about 10% of the thickness of the CMC ply 12. The CMC ply 12 preferably has a length and a width that are each at least an order of magnitude greater than the thickness of the CMC ply 12. Bonding surfaces 16 of the CMC component layer 10 are not coated by the bond-inhibiting coating 14. The bonding surfaces 16 may have any shape, including, but not limited to, one or more squares or rectangles as shown in FIG. 1, one or more stripes across the width of the CMC ply 12 as shown in FIG. 2, one or more stripes across the length of the CMC ply 12 as shown in FIG. 3, one or more circles or ovals as shown in FIG. 4, or combinations thereof, and may be regularly, irregularly, or randomly spaced or sized.

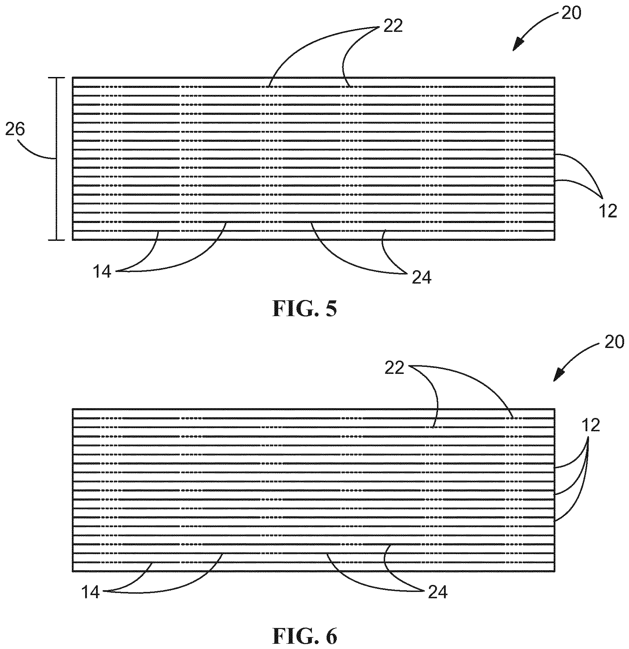

As shown in FIG. 5, a ceramic matrix composite component 20 is formed when a set of ceramic matrix composite plies 12 with bond-inhibiting coatings 14 are bonded together in a stack. When used as a seal, the CMC component 20 preferably has a thickness 26 in the range of about 1.25 to about 5 mm (0.050 to 0.200 inches). The average ply thickness and number of CMC plies 12 in a CMC component 20 may vary depending on the type of fiber being used and the amount of matrix material being used per ply. In some embodiments, the average ply thickness in the CMC component 20 is in the range of about 0.1 to about 0.25 mm (about 4 to about 10 mil) and the number of layers of CMC plies 12 in the CMC component 20 is in the range of about 5 to about 50. The ceramic matrix composite component 20 includes areas of bonding 22 between neighboring ceramic matrix composite plies 12 separated by areas of non-bonding 24 between neighboring ceramic matrix composite plies 12.

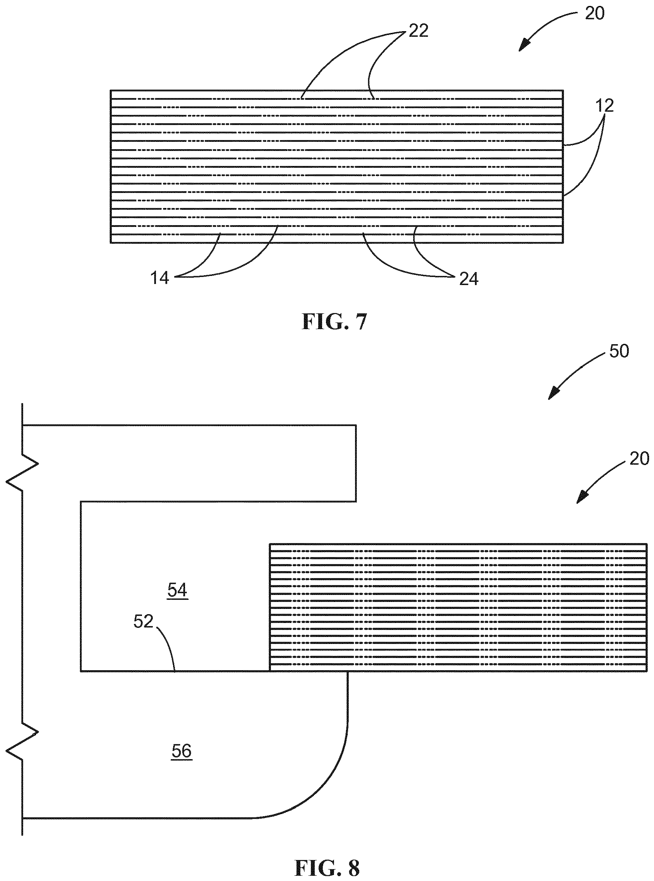

Alternative patterns of bonded areas 22 and non-bonded area 24 between neighboring ceramic matrix composite plies 12 are shown in FIG. 6 and FIG. 7, but other patterns or irregular arrangements may alternatively be successfully implemented.

Adjustments to the size, spacing, or locations of the areas of bonding 22 on the CMC plies 12 may be used to tune or optimize the flexibility of a CMC component 20 formed from the CMC plies 12 for a specific application, such as in the gas turbine seal assembly 50 shown in FIG. 8. The ceramic matrix composite component 20 may serve as a gas turbine seal component of the gas turbine seal assembly 50 by contacting a sealing surface 52 in a seal slot 54 of a gas turbine component 56 and forming a seal with the surface 52 of the gas turbine component 56.

A high-temperature CMC component 20 preferably includes bonded areas 22 as well as non-bonded areas 24 of neighboring plies to provide flexibility to the seal. The selective bonding increases the flexibility of the seal. A bond-inhibiting coating 14 between portions of CMC plies 12 prevents bonding of the CMC plies 12 at the locations of the bond-inhibiting coating 14. In some embodiments, the bond-inhibiting coating 14 includes a nitride. In some embodiments, the nitride is boron nitride (BN).

In some embodiments, the nitride is silicon nitride (Si₃N₄). In some embodiments, the bond-inhibiting coating 14 is a paste including a nitride powder mixed with a liquid. The gas turbine seal assembly 50 preferably does not include any spacers beyond the bond-inhibiting coating 14 or large gaps or voids between the CMC plies 12.

Examples of CMC materials include, but are not limited to, carbon-fiber-reinforced carbon (C/C), carbon-fiber-reinforced silicon carbide (C/SiC), silicon-carbide-fiber-reinforced silicon carbide (SiC/SiC), alumina-fiber-reinforced alumina (Al₂O₃/Al₂O₃), or combinations thereof. The CMC may have increased elongation, fracture toughness, thermal shock, dynamic load capability, and anisotropic properties as compared to a monolithic ceramic structure.

The CMC plies 12 are preferably unidirectional fiber plies with the direction of orientation of the fibers changing from one layer to the next in the stack of CMC plies 12 of the CMC component 20. The change in orientation between layers may be selected to reduce torsional stiffness or to provide a predetermined level of stiffness in the CMC component 20. In some embodiments, the change in orientation is +/- 45 degrees. In other embodiments, the fibers of a CMC ply 12 may be cross-weaved.

In some embodiments, prior to contacting and selectively bonding the surfaces of each pair of neighboring CMC plies 12, only one of the two contacting surfaces is selectively coated with a bond-inhibiting coating 14 and the other contacting surface is left uncoated. The bond-inhibiting coating 14 may be applied by any suitable apparatus, including, but not limited to, a paint brush or a spray gun. In some embodiments, this is achieved by having one uncoated side and one selectively-coated side for each of the CMC plies 12, except for one of the end CMC plies 12, which may be uncoated on both sides. In other embodiments, this is achieved by having alternating CMC plies 12 with both sides uncoated and CMC plies 12 with both sides selectively coated. In other embodiments, combinations of these two strategies may be used.

A selectively-applied bond-inhibiting coating 14 preferably covers at least 50%, alternatively at least 60%, alternatively at least 70%, alternatively at least 80%, alternatively at least 90%, alternatively in the range of 50 to 90%, alternatively in the range of 60 to 90%, alternatively in the range of 70 to 90%, alternatively in the range of 80 to 90%, or ranges or sub-ranges therebetween, of the area of a selectively-coated surface, with the balance of the surface area preferably serving as the bonding surfaces 16.

The bonding surfaces 16 of the selectively-coated surface are preferably discrete areas separated from each other by the bond-inhibiting coating 14. The shapes of the bonding surfaces 16 may be any suitable shapes, including, but not limited to, a square, a rectangle, a triangle, a circle, an oval, a straight line, a curved line, or combinations thereof. The sizes and shapes of the bonding surfaces 16 on a surface of a CMC ply 12 may be all the same or some may differ from others. The spacings between the bonding surfaces 16 on a surface of a CMC ply 12 may be regular or irregular.

In some embodiments, a method of forming a CMC component 20 includes selectively applying a bond-inhibiting coating 14 to at least one non-bonding portion of at least one of the two main surfaces of at least one of a set of CMC plies 12. The method also includes bonding the set of CMC plies 12 together to form the CMC component 20. The bonding may be done under any conventional CMC bonding conditions, with the bonding portions of the main surfaces bonded to the surfaces of the neighboring CMC ply 12. In some embodiments, the CMC plies 12 are bonding during the infiltration process. The bond-inhibiting coating 14 prevents bonding between the non-bonding portions of the selectively-coated surface and the neighboring CMC ply 12. Typically, at least a portion of the bond-inhibiting coating 14 remains between the CMC plies 12 after the bonding of the CMC plies 12. In some embodiments, the method further includes forming the CMC plies 12. In some embodiments, the method further includes inserting a portion of the CMC component 20 into a seal slot 54 of a sealing surface 52 of a gas turbine seal assembly 50. The non-bonded areas 24 of the CMC component 20 preferably provide a flexibility to the CMC component 20 in the thickness direction of the CMC component 20 greater than a flexibility of a CMC component 20 without any non-bonded areas 24.

While the invention has been described with reference to one or more embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed but that the invention will include all embodiments falling within the scope of the appended claims. In addition, all numerical values identified in the detailed description shall be interpreted as though the precise and approximate values are both expressly identified.

Various aspects and embodiments of the present invention are defined by the following numbered clauses:
1. A method of forming a ceramic matrix composite component comprising:
   selectively applying a bond-inhibiting coating to at least one non-bonding portion of at least one first surface of at least one of a plurality of ceramic matrix composite plies; and
   bonding the plurality of ceramic matrix composite plies together to form the ceramic matrix composite component such that at least one bonding portion of the at least one first surface lacking the bond-inhibiting coating bonds to a second surface of a neighboring ceramic matrix composite ply of the plurality of ceramic matrix composite plies and the bond-inhibiting coating prevents bonding between the non-bonding portion of the at least one first surface and the second surface.
2. The method of clause 1, further comprising forming the plurality of ceramic matrix composite plies.
3. The method of any preceding clause, wherein the at least one bonding portion comprises a plurality of bonding portions separated by non-bonding portions on the first surface.
4. The method of any preceding clause, wherein each pair of neighboring ceramic matrix composite plies comprises the first surface and the second surface.
5. The method of any preceding clause, wherein a presence of the at least one non-bonding portion increases a flexibility of the ceramic matrix composite component relative to a ceramic matrix composite component lacking the non-bonding portion.
6. The method of any preceding clause, wherein the ceramic matrix composite component has no spacers between the plurality of ceramic matrix composite plies beyond the bond-inhibiting coatings.
7. The method of any preceding clause, wherein the ceramic matrix composite plies comprise a ceramic matrix composite selected from the group consisting of carbon-fiber-reinforced carbon, carbon-fiber-reinforced silicon carbide, silicon-carbide-fiber-reinforced silicon carbide, alumina-fiber-reinforced alumina, and any combination thereof.
8. The method of any preceding clause, wherein the bond-inhibiting coating comprises a nitride selected from the group consisting of boron nitride and silicon nitride.
9. The method of any preceding clause, wherein the ceramic matrix composite component comprises a gas turbine seal component.
10. A ceramic matrix composite component comprising:
   a plurality of ceramic matrix composite plies bonded together to form the ceramic matrix composite component, wherein a bond-inhibiting coating on at least one non-bonding portion of at least one first surface of at least one of the plurality of ceramic matrix composite plies prevents bonding between the non-bonding portion of the at least one first surface and a second surface of a neighboring ceramic matrix composite ply of the plurality of ceramic matrix composite plies, and at least one bonding portion of the at least one first surface lacking the bond-inhibiting coating is bonded to the second surface.
11. The ceramic matrix composite component of any preceding clause, wherein the at least one bonding portion comprises a plurality of bonding portions on the first surface.
12. The ceramic matrix composite component of any preceding clause, wherein each pair of neighboring ceramic matrix composite plies comprises the first surface and the second surface.
13. The ceramic matrix composite component of any preceding clause, wherein a presence of the at least one non-bonding portion increases a flexibility of the ceramic matrix composite component relative to a ceramic matrix composite component lacking the non-bonding portion.
14. The ceramic matrix composite component of any preceding clause, wherein the ceramic matrix composite component has no spacers between the plurality of ceramic matrix composite plies beyond the bond-inhibiting coatings.
15. The ceramic matrix composite component of any preceding clause, wherein the ceramic matrix composite plies comprise a ceramic matrix composite selected from the group consisting of carbon-fiber-reinforced carbon, carbon-fiber-reinforced silicon carbide, silicon-carbide-fiber-reinforced silicon carbide, alumina-fiber-reinforced alumina, and any combination thereof.
16. The ceramic matrix composite component of any preceding clause, wherein the bond-inhibiting coating comprises a nitride selected from the group consisting of boron nitride and silicon nitride.
17. The ceramic matrix composite component of any preceding clause, wherein the ceramic matrix composite component comprises a gas turbine seal component.
18. A gas turbine seal assembly comprising:
   a gas turbine component; and
   a gas turbine seal component contacting the gas turbine component to form a seal between the gas turbine component and the gas turbine seal component, the gas turbine seal component comprising a plurality of ceramic matrix composite plies bonded together to form a ceramic matrix composite component, wherein a bond-inhibiting coating on at least one non-bonding portion of at least one first surface of at least one of the plurality of ceramic matrix composite plies prevents bonding between the non-bonding portion of the at least one first surface and a second surface of a neighboring ceramic matrix composite ply of the plurality of ceramic matrix composite plies, and at least one bonding portion of the at least one first surface lacking the bond-inhibiting coating is bonded to the second surface.
19. The gas turbine seal assembly of any preceding clause, wherein each pair of neighboring ceramic matrix composite plies comprises the first surface and the second surface.
20. The gas turbine seal assembly of any preceding clause, wherein the gas turbine seal component has no spacers between the plurality of ceramic matrix composite plies beyond the bond-inhibiting coatings.

## Claims

1. A method of forming a ceramic matrix composite component (20) comprising:
selectively applying a bond-inhibiting coating (14) to at least one non-bonding portion (24) of at least one first surface of at least one of a plurality of ceramic matrix composite plies (12); and
bonding the plurality of ceramic matrix composite plies (12) together to form the ceramic matrix composite component (20) such that at least one bonding portion (16) of the at least one first surface lacking the bond-inhibiting coating (14) bonds to a second surface of a neighboring ceramic matrix composite ply (12) of the plurality of ceramic matrix composite plies (12) and the bond-inhibiting coating (14) prevents bonding between the non-bonding portion (24) of the at least one first surface and the second surface.

2. The method of claim 1, further comprising forming the plurality of ceramic matrix composite plies (12).

3. The method of claim 1 or 2, wherein a presence of the at least one non-bonding portion (24) increases a flexibility of the ceramic matrix composite component (20) relative to a ceramic matrix composite component (20) lacking the non-bonding portion (24).

4. The method of claim 1, 2 or 3, wherein the ceramic matrix composite component (20) has no spacers between the plurality of ceramic matrix composite plies (12) beyond the bond-inhibiting coatings (14).

5. A ceramic matrix composite component (20) comprising:
a plurality of ceramic matrix composite plies (12) bonded together to form the ceramic matrix composite component (20), wherein a bond-inhibiting coating (14) on at least one non-bonding portion (24) of at least one first surface of at least one of the plurality of ceramic matrix composite plies (12) prevents bonding between the non-bonding portion (24) of the at least one first surface and a second surface of a neighboring ceramic matrix composite ply (12) of the plurality of ceramic matrix composite plies (12), and at least one bonding portion (16) of the at least one first surface lacking the bond-inhibiting coating (14) is bonded to the second surface.

6. The ceramic matrix composite component (20) of claim 5, wherein each pair of neighboring ceramic matrix composite plies (12) comprises the first surface and the second surface.

7. The ceramic matrix composite component (20) of claim 5 or 6, wherein the ceramic matrix composite component (20) has no spacers between the plurality of ceramic matrix composite plies (12) beyond the bond-inhibiting coatings (14).

8. The ceramic matrix composite component (20) of claim 5, 6 or 7, wherein the bond-inhibiting coating (14) comprises a nitride selected from the group consisting of boron nitride and silicon nitride.

9. The ceramic matrix composite component (20) of any of claims 5 to 8, wherein the ceramic matrix composite component (20) comprises a gas turbine seal component (56).

10. A gas turbine seal assembly (50) comprising:
a gas turbine component (56); and
a gas turbine seal component (56) contacting the gas turbine component (50) to form a seal between the gas turbine component (50) and the gas turbine seal component (50), the gas turbine seal component (50) comprising a plurality of ceramic matrix composite plies (12) bonded together to form a ceramic matrix composite component (20), wherein a bond-inhibiting coating (14) on at least one non-bonding portion (24) of at least one first surface of at least one of the plurality of ceramic matrix composite plies (12) prevents bonding between the non-bonding portion (24) of the at least one first surface and a second surface of a neighboring ceramic matrix composite ply (12) of the plurality of ceramic matrix composite plies (12), and at least one bonding portion (16) of the at least one first surface lacking the bond-inhibiting coating (14) is bonded to the second surface.
